# EUROPEAN PATENT SPECIFICATION

(11) **EP 2 614 253 B1**
(45) Date of publication and mention of the grant of the patent: **20.06.2018**
(21) Application number: 11758111.6
(22) Date of filing: 09.09.2011
(51) Int. Cl.: F03D 1/06, F03D 1/00

(54) **METHOD FOR MAKING A WIND TURBINE BLADE INCLUDING DETERMINING THE THICKNESS OF A WIND TURBINE BLADE COMPONENT**
VERFAHREN ZUR HERSTELLUNG EINER WINDTURBINENSCHAUFEL EINSCHLIESSLICH DER BESTIMMUNG DER DICKE EINER WINDTURBINENSCHAUFELKOMPONENTE
PROCÉDÉ DE FABRICATION DE PALE D'ÉOLIENNE AVEC DÉTERMINATION DE L'ÉPAISSEUR D'UN COMPOSANT DE PALE D'ÉOLIENNE

(30) Priority: 09.11.2010 DK 201070477; 09.09.2010 US 381285 P
(43) Date of publication of application: 17.07.2013
(73) Proprietor: Vestas Wind Systems A/S, 8200 Aarhus N (DK)
(72) Inventor: CHRISTENSEN, Bjarne Finn Jensen, DK-7120 Vejle (DK); SØRENSEN, Signe Bjerre, DK-6900 Skjern (DK)
(74) Representative: Vestas Patents Department
(86) International application number: PCT/DK2011/050337
(87) International publication number: WO 2012/031602

(56) References cited:
- WO-A2-2008/092461
- JP-A- 58 199 679
- US-A1- 2009 155 084
- US-A1- 2009 301 203

## Description

### Technical Field

This application relates generally to wind turbines and, more particularly, to a method for making a wind turbine blade including a non-destructive procedure for determining the thickness of a wind turbine blade component, such as a blade spar root section or a portion of the blade shell.

### Background

Wind turbines are used to produce electrical energy using a renewable resource and without combusting a fossil fuel. Generally, a wind turbine converts kinetic energy from the wind into mechanical energy and then subsequently converts the mechanical energy into electrical power. A horizontal-axis wind turbine includes a tower, a nacelle located at the apex of the tower, and a rotor that is supported in the nacelle. The rotor is coupled either directly or indirectly with a generator, which is housed inside the nacelle. The rotor includes a central hub and a plurality of blades (e.g., three blades) mounted thereto and extending radially therefrom. The blades may rotate relative to the hub so as to pitch the blades into or out of the wind.

US2009155084 discloses a method of making a wind turbine blade, which forms the preamble of claim 1. The method comprises obtaining a plurality of wind turbine blade components, at least one of the wind turbine blade components including a wall having a first surface and a second surface spaced from the first surface to define a wall thickness; and assembling the plurality of wind turbine blade components to produce the wind turbine blade.

The blades include an outer airfoil shell disposed about an inner spar. The outer airfoil shell is configured to provide the wind turbine blade with its aerodynamic features and characteristics (e.g., lift and drag performance) while the spar is configured to provide the strength and rigidity for supporting the loads imposed on the blade during operation. The spar may be formed in separate pieces and subsequently coupled together to form the final assembled spar. The airfoil shell may also be formed in separate pieces and subsequently coupled together. For example, the spar typically includes a generally cylindrical root section adjacent the root end of the blade which is formed in a separate process and subsequently joined to the remainder of the spar, which may in turn, be formed from multiple pieces coupled together. As the root section of the spar bears a significant portion of the load on the blade (e.g., bending moment), the root section of the spar is generally the largest section of the spar and may have a wall thickness relatively large compared to the remainder of the spar.

During manufacturing of the spar, it may be necessary or desirable to measure the thickness of the spar. Typically, the thickness of the spar may be measured using ultrasound techniques. This technique, however, often requires the surface of the spar to be generally smooth in order to obtain accurate readings. While this ultrasound technique is generally successful for the mid-spar region and outer-spar region (toward the tip) due to the spar's relatively smooth topology along these regions, the surface of the spar along the inner-spar region, including the root section, becomes too bumpy and irregular to ensure accurate measurements using this technique. Accordingly, an alternate approach is used to measure the thickness along the inner-spar region.

One approach used in the root section of the spar includes a boring process wherein a plurality of holes are drilled through the spar wall and a manual measuring process (e.g., ruler, caliper, etc.) is implemented to measure the wall thickness. After the measurement is taken, the holes may be refilled with a suitable filler material. This approach, however, has a number of drawbacks. In this regard, this process is relatively labor intensive and may result in an increased cost for the wind turbine. Additionally, the above-described process is destructive in nature and may have a negative impact on the properties or performance of the spar and the wind turbine blade as a whole. For example, there is some concern that forming a plurality of holes through the root section may reduce the overall structural integrity of the wind turbine blade. Furthermore, the process of boring holes to obtain thickness measurements is a discrete type of process that makes it difficult to obtain a relatively large set of thickness data. Accordingly, this process lends itself to an increased chance of missing a defective portion of the spar.

Accordingly, there is a need for an improved method of determining the thickness of the spar along the inner-spar region, and along the root section in particular, that addresses these and other shortcomings associated with the conventional methods described above.

### Summary

Embodiments in accordance with the invention address these and other deficiencies in conventional thickness measurement techniques. In this regard, a method for making a wind turbine blade comprises obtaining a plurality of wind turbine blade components, at least one of the wind turbine blade components including a wall having a first surface and a second surface spaced from the first surface to define a wall thickness; measuring the wall thickness of the at least one wind turbine blade component; and assembling the plurality of wind turbine blade components to produce the wind turbine blade.

In the method, measuring the wall thickness comprises associating a reflective element with one of the first or second surfaces of the wall of the component; locating a measurement device adjacent the other of the first or second surfaces of the wall of the component and generally opposite to the reflective element; emitting a signal from the measurement device that travels through the wall of the component and interacts with the reflective element to produce a return signal; receiving the return signal at the measurement device; and determining the wall thickness between the first and second surfaces using information from the signal and the return signal.

In one embodiment, obtaining a plurality of wind turbine blade components further comprises forming a root section of a wind turbine blade spar. In one embodiment, the root section may be formed by winding a fiber web about a mandrel to produce a wound root section. In another embodiment, the root section may be formed through a lay-up laminate process and includes placing a plurality of fiber layers on a tool; providing a resin to the plurality of fiber layers; and applying pressure to the fiber layers and resin to conform the shape of the fiber layers to the shape of the tool. In one embodiment, providing a resin to the fiber layers includes injecting a resin into the fiber layers. In an alternative embodiment, providing a resin to the fiber layers includes activating a pre-impregnated resin dispersed throughout the fiber layers. Applying pressure to the fiber layers may be achieved through a vacuum bag process. In another embodiment, obtaining a plurality of wind turbine blade components includes forming a portion of a blade shell, such as an upper shell half or a lower shell half. The blade shell portion may be formed by a lay-up laminate process similar to that described above.

In one embodiment, associating a reflective element with one of the first or second surfaces includes incorporating the reflective element into a confronting surface of a peel ply, and applying the peel ply to the wind turbine component so that the confronting surface of the peel ply is immediately adjacent to one of the first or second surfaces of the component. In another embodiment, associating a reflective element with one of the first or second surfaces includes incorporating the reflective element into a confronting surface of a fiber layer, and applying the fiber layer to the wind turbine component so that the confronting surface of the fiber layer is immediately adjacent to one of the first or second surfaces of the component. The fiber layer may be used alone or in combination with a conventional peel ply (i.e., without a reflective element). In still another embodiment, associating a reflective element with one of the first or second surfaces includes incorporating the reflective element into a layer of the component immediately adjacent to one of the first or second surfaces of the wall of the component such that the reflective element forms an integral part of the component.

The reflective element may be defined by a particular reflective pattern. For example, in one embodiment, the reflective pattern may be configured as a generally continuous surface. In another embodiment, the reflective pattern may include one or more reflective rings. In a further embodiment, the reflective pattern may include one or more stripes. In still a further embodiment, the reflective pattern may include one or more rings and stripes that result in a criss-cross pattern. In yet another embodiment, the reflective pattern may include one or more discrete reflective patches.

In one embodiment, the measurement device may be put in direct contact with the other of the first or second surfaces of the wall of the component opposite to the reflective element. Additionally, the measurement device may be configured to emit a signal capable of reflecting off the reflective element and may include a light or sound signal or other electromagnetic signal.

In one specific embodiment, the plurality of wind turbine components includes the root section of the blade spar, which is preferably formed through a winding process of a fiber web about a mandrel (e.g., wound root section). The reflective element is preferably located along the inner surface of the peel ply, which is wound around the outer surface of the root section. The measurement device is placed adjacent the inner surface of the root section such that the emitted signal is directed toward the outer surface and reflects off the reflective element on the inner surface of the peel ply and back toward the measurement device so as to be received thereby. The wall thickness of the root section may be determined using the information from the signal and the return signal.

### Brief Description of the Drawings

The accompanying drawings, which are incorporated in and constitute a part of this specification, illustrate various embodiments of the invention and, together with a general description of the invention given above and the detailed description of the embodiments given below, serve to explain the embodiments of the invention.
Fig. 1 is a diagrammatic perspective view of a wind turbine;
Fig. 2 is a perspective view of a wind turbine blade shown in Fig. 1;
Fig. 3 is a cross-sectional view of the wind turbine blade shown in Fig. 2 taken along line 3-3;
Fig. 4 is a partially torn away side plan view of a root section of the wind turbine blade spar shown in Fig. 2;
Fig. 5 is a schematic perspective view of a fiber placement machine configured to form the blade spar root section shown in Fig. 4 through a winding process;
Fig. 6 is a schematic illustration of a system for measuring the thickness of a medium in accordance with an embodiment of the invention;
Fig. 7 is a cross-sectional view of a root section of a blade spar illustrating a method in accordance with one embodiment of the invention wherein the reflective element is incorporated into a peel ply located adjacent the outer surface of the root section;
Figs. 8A-8E illustrate various reflective patterns in accordance with embodiments of the invention;
Fig. 9 is a cross-sectional view of a root section of a blade spar illustrating a method in accordance with another embodiment of the invention wherein the reflective element is incorporated into a fiber layer located adjacent the outer surface of the root section;
Fig. 10 is a cross-section view of a root section of a blade spar illustrating a method in accordance with another embodiment of the invention wherein the reflective element is associated with the inner surface of the root section and the measurement device is associated with the outer surface of the root section;
Fig. 11 is a schematic cross-sectional view illustrating a method for constructing the root section or shell of a wind turbine blade in accordance with another embodiment of the invention;
Fig. 12 is a schematic cross-sectional view similar to Fig. 11 illustrating placement of the reflective element within the interior of the laminate construction; and
Fig. 13 is a cross-sectional view of a blade shell illustrating a method in accordance with one embodiment of the invention wherein the reflective element is incorporated into a peel ply located adjacent the outer surface of the blade shell.

### Detailed Description

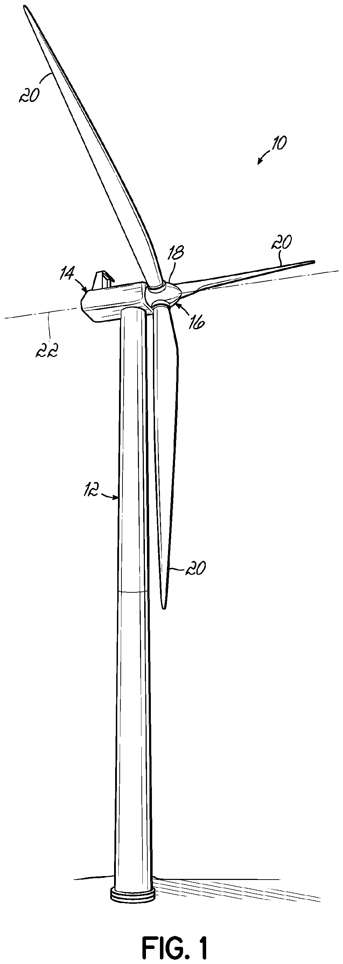

With reference to Fig. 1, a wind turbine 10 includes a tower 12, a nacelle 14 disposed at the apex of the tower 12, and a rotor 16 operatively coupled to a generator (not shown) housed inside the nacelle 14. In addition to the generator, the nacelle 14 houses miscellaneous components required for converting wind energy into electrical energy and various components needed to operate, control, and optimize the performance of the wind turbine 10. The tower 12 supports the load presented by the nacelle 14, the rotor 16, and other components of the wind turbine 10 that are housed inside the nacelle 14 and also operates to elevate the nacelle 14 and rotor 16 to a height above ground level or sea level, as may be the case, at which faster moving air currents of lower turbulence are typically found.

The rotor 16 of the wind turbine 10, which is represented as a horizontal-axis wind turbine, serves as the prime mover for the electromechanical system. Wind exceeding a minimum level will activate the rotor 16 and cause rotation in a direction substantially perpendicular to the wind direction. The rotor 16 of wind turbine 10 includes a central hub 18 and a plurality of blades 20 that project outwardly from the central hub 18 at locations circumferentially distributed thereabout. In the representative embodiment, the rotor 16 includes three blades 20, but the number may vary. The blades 20 are configured to interact with the passing air flow to produce lift that causes the central hub 18 to spin about a longitudinal axis 22.

The wind turbine 10 may be included among a collection of similar wind turbines belonging to a wind farm or wind park that serves as a power generating plant connected by transmission lines with a power grid, such as a three-phase alternating current (AC) power grid. The power grid generally consists of a network of power stations, transmission circuits, and substations coupled by a network of transmission lines that transmit the power to loads in the form of end users and other customers of electrical utilities. Under normal circumstances, the electrical power is supplied from the generator to the power grid as known to a person having ordinary skill in the art.

With reference to Figs. 1-3, the wind turbine blade 20 is configured as an elongate structure having, in an exemplary embodiment, an outer shell 24 disposed about an inner support element or spar 26. The outer shell 24 may be optimally shaped to give the blade 20 the desired aerodynamic properties to generate lift, while the spar 26 provides the structural aspects (e.g., strength, stiffness, etc.) to blade 20. The elongate blade 20 includes a first root end 28 which is configured to be coupled to the central hub 18 when mounted to rotor 16, and a tip end 30 longitudinally opposite to root end 28. As discussed above, the outer shell 24 includes a first, upper shell half 32 on the suction side of the blade 20, and a second, lower shell half 34 on the pressure side of the blade 20, the upper and lower shell halves 32, 34 being coupled together along a leading edge 36 and a trailing edge 38 located opposite one another across a chord of the blade 20.

In an exemplary embodiment, the spar 26 may be formed in sections in separate manufacturing processes and then subsequently coupled together to form the complete spar 26. By way of example, the spar 26 includes a root section 40 immediately adjacent the root end 28 which may be formed in a separate process. The upper and lower shell halves 32, 34 and the multiple sections of the blade spar, including root section 40, constitute a plurality of wind turbine blade components which may be assembled to form wind turbine blade 20.

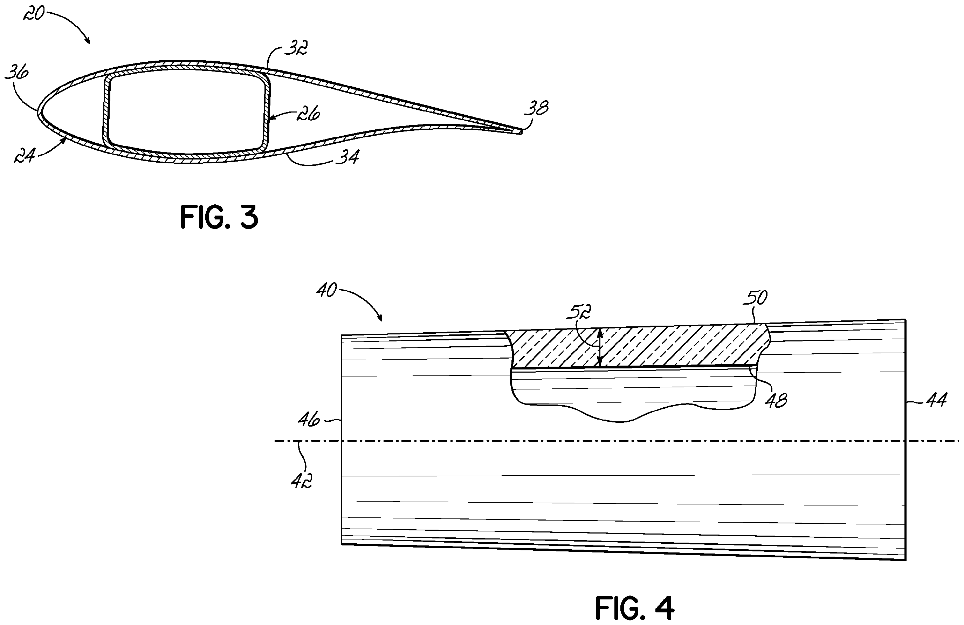

As illustrated in Fig. 4, the root section 40 may have a generally conical configuration in a longitudinal direction or axis 42 with a first end 44 thereof having a cross dimension (e.g., diameter) which is generally larger than a cross dimension at a second end 46 thereof. Additionally, the root section 40 is generally tubular and defines a wall having an inner surface 48, an outer surface 50, and a wall thickness 52 defined to be the distance between the inner and outer surfaces 48, 50. In an exemplary embodiment, the cross-sectional shape of the root section 40 may vary along the longitudinal axis 42.

For example, in one embodiment, the root section 40 may have a generally circular cross-sectional shape adjacent the first end 44 and a generally rectangular cross-sectional shape adjacent the second end 46. Other cross-sectional shapes are also possible in alternative embodiments. Moreover, the wall thickness 52 may also vary along the longitudinal axis 42. In this regard, the wall thickness 52 is generally quite large adjacent the first end 44, but then may decrease in a direction toward the second end 46. For example, adjacent the first end 44 of root section 40, the wall thickness 52 may be between about 80 mm and about 100 mm and then decrease toward second end 46. Other wall thickness values are also possible, depending on the particular application and design considerations (e.g., blade size, materials, etc.). The root section 40 is generally larger, in both overall size (e.g., cross dimension) and wall thickness 52, for example, as compared to the remainder of the spar 26 due to the severity of the loads that typically occur at the root end 28 of the blade 20.

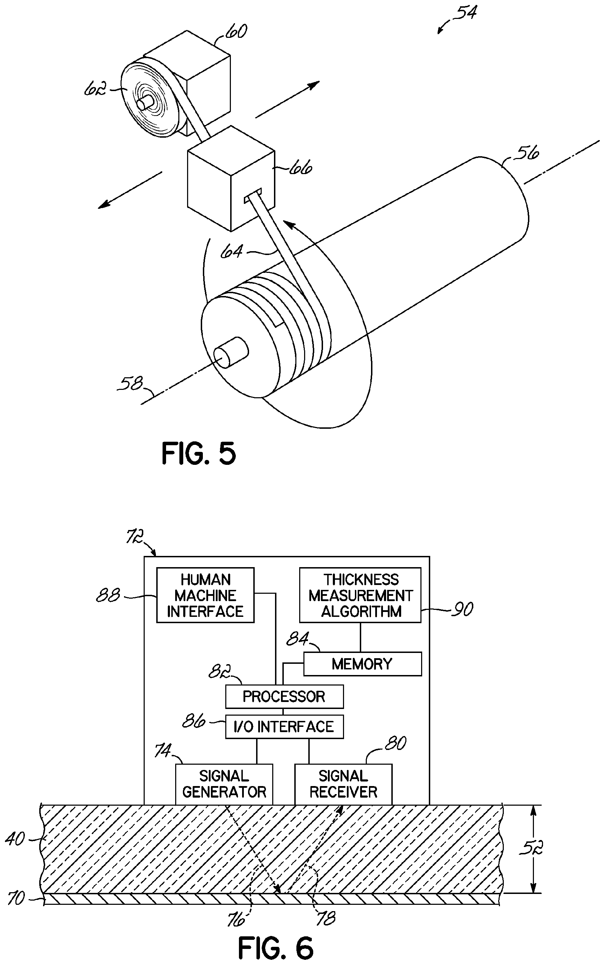

In an exemplary embodiment, and as shown schematically in Fig. 5, the root section 40 may be formed in a fiber placement machine 54 having an inner mandrel 56 that defines a longitudinal axis 58 and a multi-axis machine placement head 60 that moves relative to the mandrel 56. As used herein, a fiber placement machine is any machine that deposits fibrous reinforcement material, such as onto a work surface or the like. In one embodiment, for example, the placement head 60 may move circumferentially about the mandrel 56 and in a direction generally parallel to the longitudinal axis 58 of the mandrel 56 while the mandrel 56 remains stationary. In an alternative embodiment, the placement head 60 may remain stationary and the mandrel 56 may be rotatable about the longitudinal axis 58 and movable in a direction generally parallel to the longitudinal axis 58. One or more rolls 62 may be associated with the placement head 60 for feeding fiber webs 64 to the placement head 60 to be deposited onto the mandrel 56 or on previously laid fiber webs to thereby form the root section 40.

The fiber webs 64 may be spooled or wrapped around the rolls 62 so that rotation of the rolls 62 allows the fiber webs 64 to be unwrapped therefrom and deposited onto the mandrel 56. The fiber webs 64 may be formed from a fibrous material suitable for forming the root section 40. For example, the fiber webs 64 may include glass fibers, carbon fibers, or combinations thereof including, for example, glass and aramid or carbon and aramid. The fiber webs 64 may also be pre-impregnated or semi-impregnated with a suitable resin. A dry fiber web may also be used and resin introduced in some other manner. In this regard, the fiber web 64 may pass through a resin station 66 prior to being deposited on the mandrel 56. For example, in one embodiment, the fiber web 64 is passed through a resin bath prior to deposition on the mandrel 56. In an alternative embodiment, however, the fiber web 64 may be spray coated with resin prior to deposition. Those of ordinary skill in the art may recognize other materials used for fiber webs 64 and suitable for forming the root section 40 of blade 20, and may further recognize other techniques for applying resin to the fiber web 64.

While there are many advantages to forming the root section 40 using the winding process described above, one drawback to the process is that in portions having a relatively large wall thickness 52, undulations and other irregularities may form that result in the outer surface 50 of root section 40, especially adjacent first end 44, having a bumpy or otherwise less than smooth topology. Such a rough topology, in turn, may negatively impact the accuracy with which thickness measurements can be made using conventional approaches, such as ultrasound. Accordingly, the boring operation described above is used as an alternative in the sections which are too thick to ensure accurate measurements. This often includes the root section 40 of the spar 26. Aspects of the invention address the shortcomings of these alternative measurement operations in thick portions of the spar 26. More particularly, aspects of the invention provide a method for determining the wall thickness 52 along thick portions of the spar, such as along root section 40, in a reliable and non-destructive manner.

In this regard, and as schematically illustrated in Fig. 6, the method includes the use of a reflective element 70 associated with the root section 40 and a measurement device 72 capable of operatively cooperating with reflective element 70 to make relatively accurate distance (e.g., thickness) measurements. In this regard, measurement device 72 includes a signal generator 74 capable of generating a signal 76 configured to propagate or travel through the material or medium that forms the wall thickness 52 of root section 40. The signal generator 74 may be configured to generate a wide range of signals including, for example and without limitation, light signals, sound signals, heat signals, electrical signals or other electromagnetic signals sufficiently capable of traveling through the medium that forms the root section 40. The reflective element 70 is generally positioned opposite to the measurement device 72 and is configured to interact with the signal so as to reflect at least some portion of the signal 76 back in the direction of the measurement device 72. To this end, the reflective element 70 may be formed of suitably chosen materials, such as, and without limitation, carbon or metal, that are configured to sufficiently reflect the signal emitted by the measurement device 72. The presence of reflective element 70 results in a return signal 78 that is capable of being picked up or received by measurement device 72. More particularly, measurement device 72 includes a signal receiver 80 configured to receive the return signal 78.

The signal generator 74 and the signal receiver 80 may be operatively coupled to a processor 82 selected from for example and without limitation microprocessors, micro-controllers, digital signal processors, microcomputers, central processing units, field programmable gate arrays, programmable logic devices, state machines, logic circuits, analog circuits, digital circuits, and/or any other devices that manipulate signals (analog and/or digital) based on operational instructions that are stored in a memory 84. In this regard, the measurement device 72 may include an Input/Output (I/O) interface 86 which employs a suitable communication protocol for communicating with the signal generator 74 and signal receiver 80 and may include one or more analog to digital converters (ADCs) (not shown) to convert analog signals received by the I/O interface 86 into a form suitable for processing by the processor 82, as well as digital to analog converters (DACs) for converting digital signals from the processor 82 into analog signals. The I/O interface 86 may also include a data port (not shown), such as an Ethernet, USB, FireWire, modem, RS-232, or other suitable data port to allow communications between the measurement device 72 and/or a network or other device, such as a computer and/or data storage device.

A human machine interface (HMI) 88 may be operatively coupled to the processor 82 of measurement device 72 in a known manner. The HMI 88 may include output devices, such as alphanumeric and/or graphical displays, a touch screen, and other visual indicators, and input devices and controls, such as an alphanumeric keyboard, a pointing device, keypads, pushbuttons, control knobs, etc., capable of accepting commands or input from the operator and transmitting the entered input to the processor 82.

Processor 82 may operate under the control of an operating system, and executes or otherwise relies upon computer program code or logic embodied in various computer software applications to read data from and transmit instructions or signals to the signal generator and receiver 74, 80 through I/O interface 86. The resident computer program code executing on the measurement device 72 as a set of instructions may include a thickness measurement algorithm (TMA) 90 operative to determine the wall thickness 52. To this end, the TMA 90 may be adapted to collect and store in memory 84 data received from the signal generator and receiver 74, 80 and to produce or calculate thickness measurements based on the data collected.

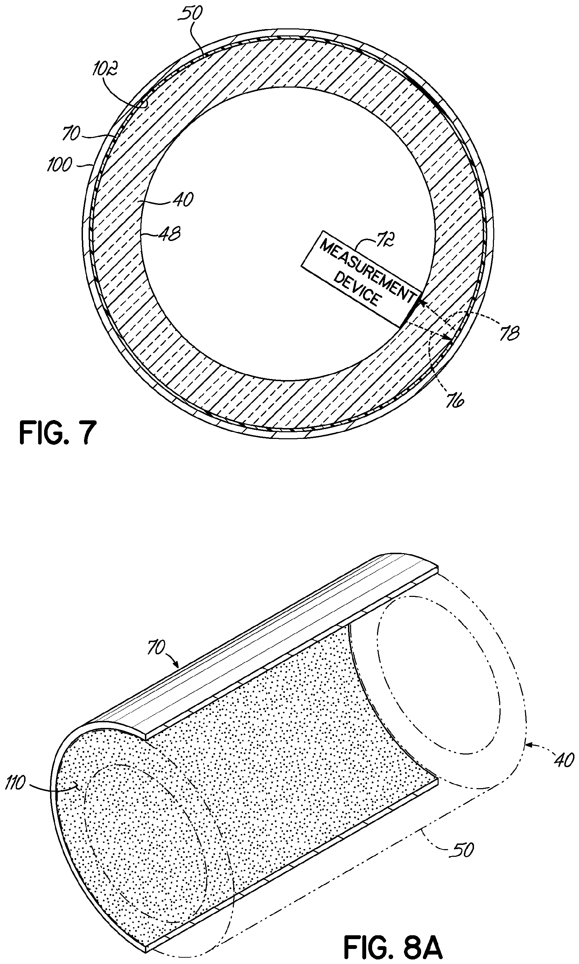

An exemplary implementation of the inventive method is illustrated in Fig. 7. At the end of the winding process described above for making the root section 40, a peel ply 100 may be wound on the outer surface 50 of the root section 40. Peel ply 100 is generally known in the art and is formed from a woven fabric material and applied to the root section with resin. The peel ply 100 is configured to protect the root section 40 and is generally removed from the root section 40 prior to use. In one embodiment, the reflective element 70 may be incorporated into the peel ply 100. In this regard, the peel ply 100 may include a confronting surface, such as an inner surface 102, configured to operate as the reflective element 70. In other words, the reflective element 70 is incorporated into peel ply 100 such that it forms part of the peel ply 100. By way of example and without limitation, the filaments or threads that form the inner surface 102 of the peel ply 100 may be made from metal or other suitable materials capable of reflecting a sufficient portion of the signal 78 from measurement device 72. Alternatively, the reflective element 70 may be formed from a metal sheet or metal foil which is adhered or otherwise coupled to the confronting surface of the peel ply 100. Other sheeting or foil materials may be used so long as they reflect a sufficient portion of the signal 78. In this way, the reflective element 70, which in this embodiment may be in the form of a generally continuous reflective surface, is immediately adjacent to the outer surface 50 of the root section 40 and therefore may result in very accurate thickness measurements.

In this embodiment, the measurement device 72 is positioned adjacent the inner surface 48 of the root section 40. For example, the measurement device 72 may be placed in contact with the inner surface 48 of the root section 40. Alternatively, the measurement device 72 may be slightly spaced from inner surface 48. A signal 76 is generated in signal generator 74 and emitted therefrom so as to travel through the medium that forms the root section 40 (e.g., glass fiber and resin) to reach the reflective element 70. The signal 76 interacts with the reflective element 70 so that at least a portion of the signal 76 is reflected in the form of a return signal 78 back toward the measurement device 72. The return signal 78 is received by signal receiver 80 and the processor 82 then implements the algorithm 90 to determine the wall thickness 52 of the root section 40 at the location in which the measurement was taken. The wall thickness measurement 52 may be stored in memory 84 and additional measurements may be taken.

As should be recognized, in order to successfully take a thickness measurement at a location using measurement device 72, there must be a reflective element 70 which corresponds to the measurement location, i.e., a reflective element 70 must be generally opposite to the measurement location. In other words, if there is not a corresponding reflective element at a measurement location, then it will generally not be possible to determine an accurate wall thickness measurement. However, there is a wide variety of reflective element patterns which may be used in the inventive method. The type of pattern may dictate whether discrete thickness measurements are made or whether a continuous type of scanning process may be used.

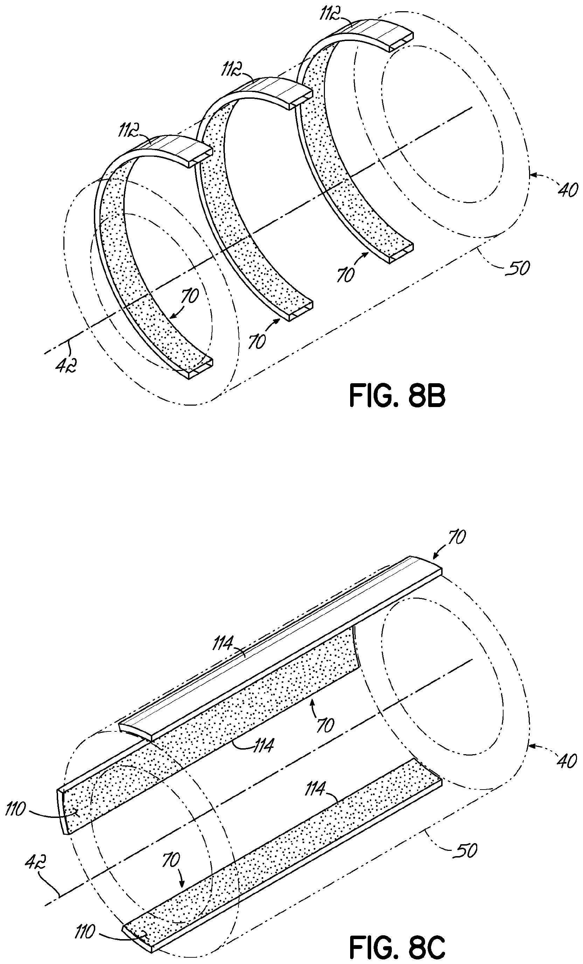

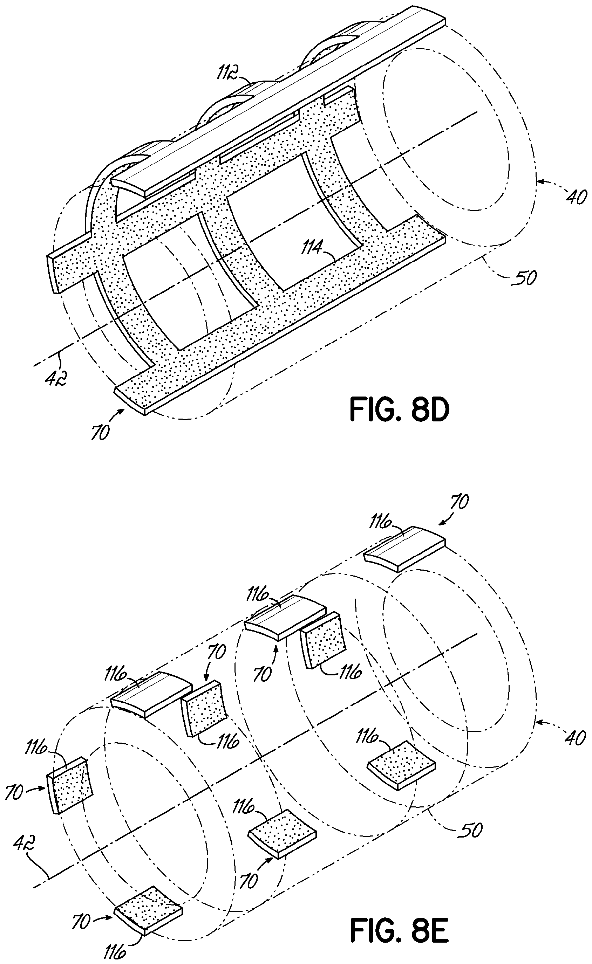

By way of example and not limitation, Figs. 8A-8E illustrate a variety of reflective element patterns which may be implemented with the inventive method. In this regard, Fig. 8A illustrates an embodiment wherein the reflective element 70 includes a generally continuous reflective surface 110 which substantially covers the entire outer surface 50 of the root section 40. For example, the entire inner confronting surface 102 of peel ply 100 may form a reflective surface 110. Fig. 8B illustrates an embodiment wherein the reflective element 70 is configured as one or more circumferential rings 112 spaced along the longitudinal axis 42 of the root section 40. Fig. 8C illustrates an embodiment wherein the reflective element 70 is configured as one or more longitudinal stripes 114. Fig. 8D illustrates an embodiment wherein the reflective element 70 is configured as a criss-cross pattern with at least one ring 112 and one stripe 114. Lastly, Fig. 8E illustrates an embodiment wherein the reflective element 70 is configured as discrete patches 116.

In one aspect of this embodiment, it should be recognized that because the reflective element 70 is incorporated into the peel ply 100, the reflective element 70 does not form part of the final product, i.e., when the root section 40 is used, the peel ply 100 is removed and no longer forms a part of the root section 40. Thus, incorporating the reflective element 70 into the peel ply 100 allows for accurate measurements of the root section 40 during manufacturing, but does not otherwise affect the construction of the blade. This allows this method to be implemented with existing manufacturing processes with relatively few modifications (i.e., only the peel ply 100 is modified).

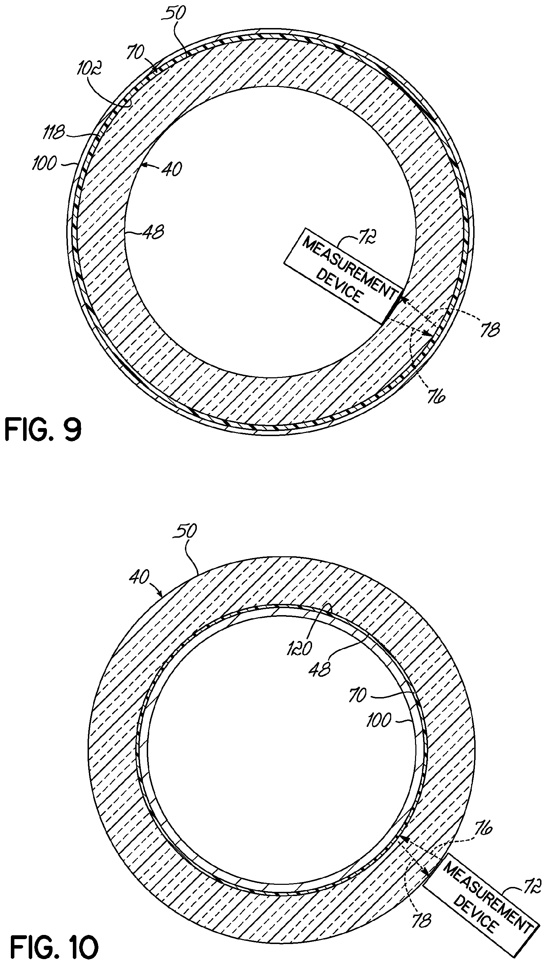

While the previous embodiment incorporated the reflective element 70 into the peel ply 100, the invention is not so limited. In this regard, and as illustrated in Fig. 9, the reflective element 70 may be separate from the peel ply 100. More particularly, at the end of the winding process described above for making the root section 40, a fiber layer 118 including the reflective element 70 may be wound on the outer surface 50 of the root section 40 with resin. The peel ply 100 may then be wound on top of the fiber layer 118. In one embodiment, the reflective element 70 may be incorporated into the fiber layer 118. In this regard, the fiber layer 118 may include a confronting surface configured to operate as the reflective element 70. In other words, the reflective element 70 is incorporated into the fiber layer 118 such that it forms part of the fiber layer 118. This may be achieved in a manner similar to that described above for the peel ply 100. Additionally, the fiber layer 118 may include reflective element patterns such as those shown in Figs. 8A-8E and operate in substantially the same way as that described above. The fiber layer 118 may be removed from the root section 40 when the peel ply 100 is peeled away from the root section 40. Thus, the fiber layer 118 does not form a part of the final product.

While the above-described embodiments may be preferred because the embodiments position the reflective element 70 substantially immediately adjacent the outer surface 50 of the root section 40, and therefore provides an accurate wall thickness measurement in accordance with the inventive method, other arrangements are contemplated to be within the scope of the present invention. For example, instead of the reflective element 70 being removed from the root section 40 with the peel ply 100 or fiber layer 118, the reflective element 70 may be incorporated into the outer layer of the root section 40 itself. In other words, the reflective element 70 may be integrated into the root section 40 such that is forms an integral part thereof. In this regard, during the winding process described above and when the winding process reaches the outer most layer or substantially near the outer most layer of the root section 40, the normal fiber web 64 may be changed out, wherein the new fiber web includes various threads or filaments, such as metal threads, that form the reflective element 70. In this way, the patterns shown in Figs. 8A-8E would not be on the inner surface 102 of the peel ply 100 or in the fiber layer 118, but would be formed in the outer most layer of the root section 40 itself. While typically a thin resin layer would be formed on top of the outer most fabric layer, the resin thickness may be ignored or otherwise accounted for when making the thickness measurements, as described above.

The embodiments described above generally associate the reflective element 70 with the outer surface 50 of the root section 40 and associate the measurement device 72 with the inner surface 48 of the root section 40 (e.g., see Figs. 7 and 9). However, the invention is not so limited and other arrangements may be possible. By way of example and without limitation, the reflective element 70 may be associated with the inner surface 48 while the measurement device 72 is associated with the outer surface 50. Such an embodiment is illustrated in Fig. 10. It should be recognized that the method carried out on the embodiment in Fig. 10 would be similar to that described above and thus will not be described in further detail. The reflective element 70 may be associated with the inner surface 48 in a manner similar to that described above for the outer surface 50.

In this regard, in one embodiment peel ply 100 having an outer surface 120 including the reflective element 70 may be wound about mandrel 56 prior to the fiber web 64 that forms the root section 40 being wound about mandrel 56. Alternatively, a fiber layer 118 (with or without a peel ply) including reflective element 70 may be wound about mandrel 56 prior to the fiber web 64 that forms the root section 40 being wound about mandrel 56. Of course, any peel ply 100 or fiber layer 118 on the inner surface 48 of the root section 40 may be removed prior to use. In a further alternative, the reflective element 70 may be incorporated into the inner most layer of the root section 40 in a manner similar to that described above so that it forms an integral part of the root section 40. In these various embodiments associated with the inner surface 48, the reflective element 70 may have a pattern as shown in any of Figs. 8A-8E.

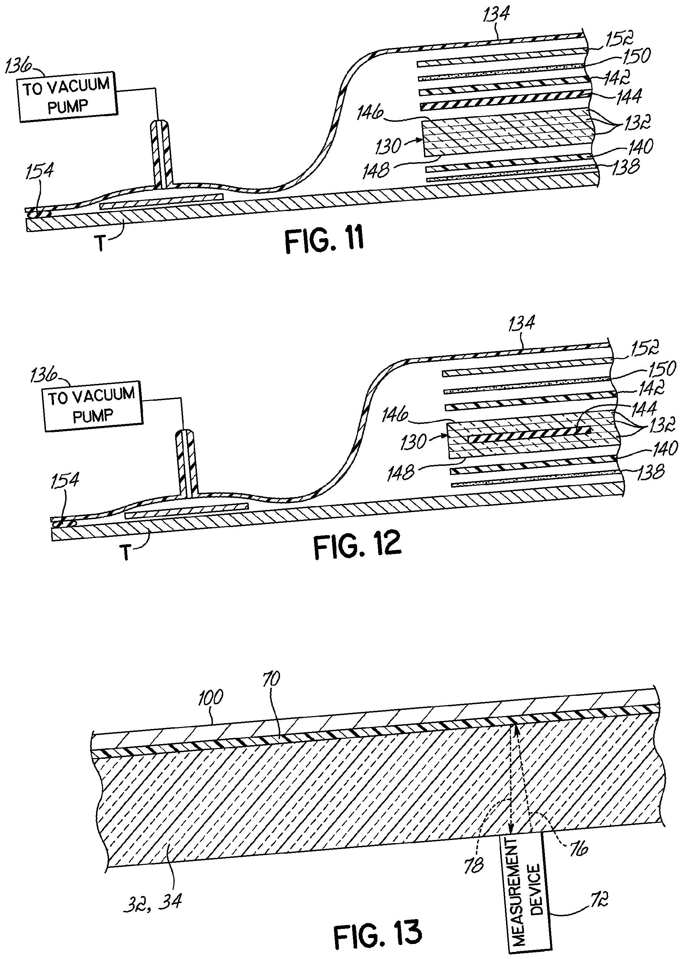

The embodiments described above were primarily directed to root sections 40 formed from a winding process about a mandrel (often referred to as a wound root). However, various aspects of the invention as generally described above may be implemented in alternative forming processes for the root section 40. For example, a lay-up laminate process about a mandrel or tool T may be used. Such a process is schematically illustrated in Fig. 11. In this process, root section 40 may be formed by a composite laminate 130 made up of a fiber material such as glass fiber, carbon fiber, or other material or combination of materials known to those of ordinary skill in the art of manufacturing wind turbine blades. In a specific embodiment, the composite laminate 130 includes a plurality of layers 132 of a resin-impregnated fiber fabric. Alternatively, the composite laminate 130 may include layers 132 that are dry (i.e., resin-free), with resin being injected into the forming process and directed toward the layers 132. A vacuum bag 134 may be applied over the composite laminate 130 and a vacuum source 136 is actuated to evacuate excess air and resin from the layers 132, through vacuum-generated pressure and heat from an external source, thus resulting in formation of the composite laminate 130.

The process for forming the root section 40 may include placing a release agent 138, such as a liquid release coating, a wax, or a solid barrier (e.g., Teflon® tape), over the tool T such as a first half of a mold or a mandrel. An optional layer (not shown) of release material (e.g., film) may then be applied over the release agent 138. In addition, a first optional layer of peel ply 140 may be applied over the release material layer, if present, or directly over the release agent 138. Next, several layers 132 of the fiber fabric may be placed over one another to define an assembly of layers 132 and resin, until a desired, predetermined thickness is reached. This may include stacking of the layers 132 of the fiber fabric material so as to define several layers 132 of the fabric around the tool or mandrel. Once the desired thickness of the assembly is reached, a second optional peel ply 142 made, for example, of nylon or some other tightly woven fabric impregnated with a release agent, may be applied over the formed assembly.

In the illustrated embodiment, a reflective element 144, which may, for example, include a layer of reflective material (e.g., similar to fiber layer 118), may be applied directly over the composite laminate 130 and under the second optional peel ply 142, such that the reflective element 144 will end up on the outer surface 146 of the composite laminate 130 when the forming process is complete. Alternatively, the reflective element 144 may be incorporated into the second peel ply 142, such as along an inner surface 148 thereof (similar to that described above for Fig. 7, but not shown in Fig. 11). Once the second optional peel ply 142 is in place, a layer 150 of release film may be applied thereover. In the embodiment of Fig. 11, a breather or bleeder material layer 152 may then be applied over the second optional peel ply 142, which is configured to absorb excess resin and let gases escape during formation of the composite laminate 130. The breather or bleeder material layer 152 also provides a continuous air path for pulling of the vacuum and prevents direct contact between the resin and the vacuum bag 134.

With continued reference to Fig. 11, the vacuum bag 134 is placed over the above-mentioned layers and secured in place against the tool T via a securing element 154 such as a bag sealant tape, and the vacuum source 136 is actuated. Actuation of the vacuum source 136 is effective to pull the bag 134 toward the tool T due to atmospheric pressure being applied thereto and to remove air as well as excess resin from the assembly of layers 132 and resin. In a subsequent step, the resulting assembly is allowed to cure. In an alternative embodiment of the method described above, a resin distribution medium (not shown) may be placed under the vacuum bag 134 and used to distribute resin to the layers 132, when the layers 132 are not pre-impregnated with resin but are instead dry layers of fiber fabric.

In any event, the resulting product from the process will be a root section 40 similar to that shown in Figs. 7 or 9, depending on the particular embodiment of the lay-up process used. The method for measuring the wall thickness of the root section 40 as described above may then be implemented. Based on the description provided above, one of ordinary skill in the art will recognize how to implement the method when applied to the root section 40 formed by the lay-up laminate process described above. Therefore, a further detailed explanation will not be provided.

Referring now to Fig. 12, that figure illustrates an alternative embodiment, similar to Fig. 11, but in which the reflective element 144 is instead applied during stacking of the layers 132 of fiber fabric, i.e., between the layers 132. This results in the reflective element 144 being disposed inside the finished composite laminate 130 rather than on an outside surface thereof. In such an embodiment, the reflective element 144 may serve as a marker or other point of interest. More specifically, a discrete reflective element 144 may be placed at a predetermined location within the composite laminate 130 so as to mark a location of interest. When a user wishes to identify the location of interest, a device such as the measurement device 72 or another device may be moved over the root section 40 until a location is reached consistent with the presence of the desired reflective element 144.

Those of ordinary skill in the art will readily appreciate that the number, type, and arrangement of layers of materials and other components illustrated in Figs.11 and 12 are intended to be exemplary rather than limiting, insofar as other designs are contemplated. Also, while the embodiment illustrated in Fig. 11 associates the reflective element 144 with the outer surface 146, in an alternative embodiment, the reflective element 144 may be associated with the inner surface 156 in a manner similar to that described above. Moreover, the reflective element 144 may be incorporated into the outer most layer or inner most layer of fibers that form composite laminate 130.

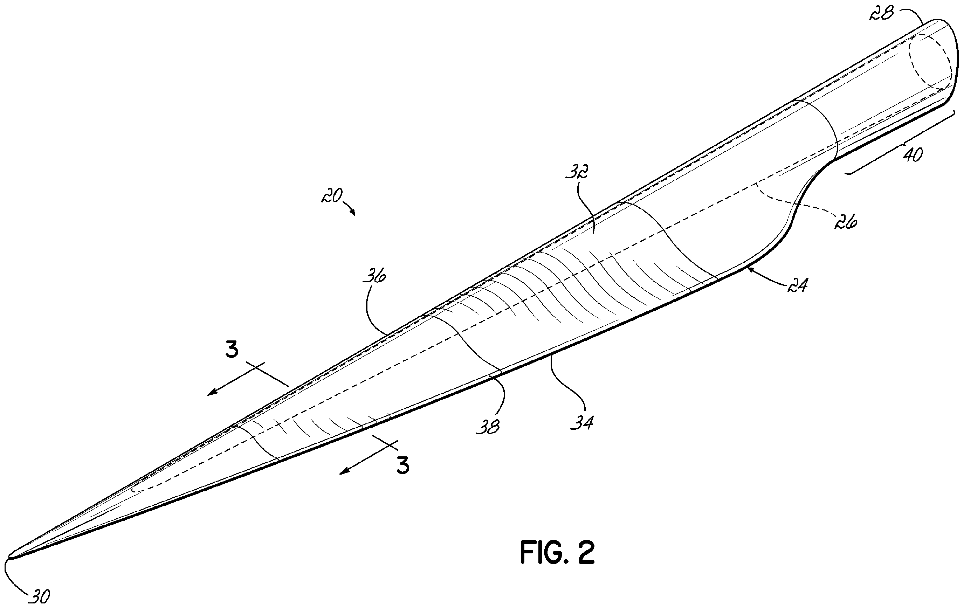

For all the embodiments described above, at some point the plurality of wind turbine components must be assembled together to form the wind turbine blade 20. In this regard, and as noted above, the spar 26 may be formed in multiple sections and the sections mated together to form the complete spar 26. This process is generally well known and will not be described in further detail. Additionally, and as also discussed above, the blade shell 24 including the upper and lower shell halves 32, 34 may be formed through molding process using respective upper and lower mold halves. To complete the assembly, the spar may be position in one of the mold halves and in engagement with an inner surface of the respective shell half located therein. A layer of adhesive may be applied to the spar or the shell half so as to secure the spar to the shell half. Next, the other mold half may be juxtapositioned relative to the first mold half so that the two shell halves meet along the leading and trailing edges. This may be accomplished, for example, through a rotatable mold assembly. Again, a layer of adhesive may be applied to the spar or to the shell half in the other mold half so as to secure the two together. The assembly may then be cured, such as by a heating process. The result is a wind turbine blade 20 such as that shown in Fig. 2. The above describes one exemplary method for assembling a plurality of wind turbine blade components to form a wind turbine blade. Other methods may be used to assembly the components to form the blade and remain within the scope of the present invention.

While the invention has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. For example, while embodiments have been directed to wall thickness 52 measurements of the root section 40 of the spar 26 of the wind turbine blade 20, it is believed that the methods described herein may be used on a wider range of wind turbine components.

For example, and without limitation, the methods described herein may be used to measure the thickness of the spar 26 at other locations spaced from the root end 28 of the blade 20. Depending on the design of the spar, the methods may be used to measure the thickness of the spar caps and/or the spar webs. Moreover, the methods described herein may also apply to measuring the thickness of the blade shells, e.g., the upper shell half 32 and/or the lower shell half 34. In this regard, the blade shell halves 32, 34 may be formed from a process similar to that described in Fig. 11, wherein the tool T includes a mold half that has a shape corresponding to the shape of the desired shell half 32, 34. The method for such an embodiment is schematically illustrated in Fig. 13, wherein the thickness measurement is being applied to the shell halves 32, 34 instead of the root section 40. As those of ordinary skill in the art will recognize how to implement the method described herein when applied to shell halves 32, 34, a further detailed explanation will not be provided.

Thus, the invention in its broader aspects is therefore not limited to the specific details, representative methods, and illustrative examples shown and described. Accordingly, departures may be made from such details without departing from the scope of the general inventive concept.

## Claims

1. A method of making a wind turbine blade (20), comprising:
obtaining a plurality of wind turbine blade components (26, 32, 34, 40), at least one of the wind turbine blade components including a wall having a first surface (50) and a second surface (48) spaced from the first surface to define a wall thickness (52); and assembling the plurality of wind turbine blade components (26, 32, 34, 40) to produce the wind turbine blade (20), **characterised by**
measuring the wall thickness (52) of the at least one wind turbine blade component (26, 32, 34, 40), comprising:
associating a reflective element (70) with one of the first or second surfaces (50, 48) of the wall of the component;
locating a measurement device (72) adjacent to the other of the first or second surfaces (50, 48) of the wall of the component and generally opposite to the reflective element (70);
emitting a signal (76) from the measurement device (72) that travels through the wall of the component and interacts with the reflective element (70) to produce a return signal (78);
receiving the return signal (78) at the measurement device (72); and
determining the wall thickness (52) between the first and second surfaces (50, 48) using information from the signal (76) and return signal (78).

2. The method according to claim 1, wherein obtaining a plurality of wind turbine blade components (26, 32, 34, 40) further comprises forming a root section (40) of a blade spar (26).

3. The method according to claim 2, wherein forming a root section (40) of a blade spar (26) further comprises winding a fiber web about a mandrel (56) to produce a wound root section (40) of the blade spar.

4. The method according to claim 1, wherein forming a plurality wind turbine blade components (26, 32, 34, 40) further comprises forming a portion of a blade shell (32, 34).

5. The method according to any of the preceding claims, wherein associating the reflective element (70) with one of the first or second surfaces of the wall of the component (26, 32, 34, 40) further comprises:
incorporating the reflective element (70) into a confronting surface (102) of a peel ply (100); and
applying the peel ply (100) to the wind turbine component so that the confronting surface (102) of the peel ply is immediately adjacent to one of the first or second surfaces (50, 48) of the wall of the component.

6. The method according to any of claims 1-4, wherein associating the reflective element (70) with one of the first or second surface (50, 48) of the wall of the component (26, 32, 34, 40) further comprises:
incorporating the reflective element (70) into a confronting surface of a fiber layer (118); and
applying the fiber layer (118) to the wind turbine component so that the confronting surface of the fiber layer is immediately adjacent to one of the first or second surfaces (50, 48) of the wall of the component.

7. The method according to any of claims 1-4, wherein associating the reflective element (70) with one of the first or second surface (50, 48) of the wall of the component (26, 32, 34, 40) further comprises:
incorporating the reflective element (70) into a layer (118) of the component immediately adjacent to the one of the first or second surfaces (50, 48) of the wall of the component such that the reflective element (70) forms an integral part of the component.

8. The method according to any of the preceding claims, wherein the reflective element (70) is defined by a reflective pattern (110, 112, 114, 116), the reflective pattern being selected from the group consisting of a generally continuous surface (110), one or more rings (112), one or more stripes (114), a criss-cross pattern (112, 114), and one or more discrete patches (116).

9. The method according to any of the preceding claims, wherein locating a measurement device (72) adjacent to the other of the first or second surfaces (50, 48) of the wall of the component (26, 32, 34, 40) further comprises contacting the other of the first or second surfaces (50, 48) of the wall of the component with the measurement device (72).

10. The method according to any of the preceding claims, wherein emitting a signal (76) from the measurement device (72) further comprises emitting a light signal or a sound signal from the measurement device.

11. The method according to any of the preceding claims, wherein the at least one of the wind turbine blade components including a wall, is a root section (40) of a blade spar (26), and the first surface and the second surface (50, 48) are an outer surface (50) and an inner surface (48), respectively, of the root section (40).

12. The method according to claim 11, wherein obtaining a plurality wind turbine blade components further comprises forming the root section (40) of the blade spar (26) by winding a fiber web (64) about a mandrel to produce a wound root section (40).

## Patentansprüche

1. Verfahren zur Herstellung eines Windturbinenblatts (20), umfassend:
Erhalten einer Vielzahl von Windturbinenblattkomponenten (26, 32, 34, 40), wobei mindestens eine der Windturbinenblattkomponenten eine Wand beinhaltet, die eine erste Oberfläche (50) und eine zweite Oberfläche (48), die von der ersten Oberfläche beabstandet ist, sodass sie eine Wanddicke (52) definiert, aufweist; und Zusammenbauen der Vielzahl von Windturbinenblattkomponenten (26,32,34,40), um das Windturbinenblatt (20) herzustellen, **gekennzeichnet durch**
Messen der Wanddicke (52) der mindestens einen Windturbinenblattkomponente (26, 32, 34, 40), umfassend:
Zuordnen eines reflektierenden Elements (70) zu einer der ersten oder der zweiten Oberfläche (50, 48) der Wand der Komponente;
Anordnen einer Messeinrichtung (72) benachbart zu der anderen der ersten oder der zweiten Oberfläche (50, 48) der Wand der Komponente und generell entgegengesetzt zu dem reflektierenden Element (70);
Aussenden eines Signals (76) von der Messeinrichtung (72), das sich durch die Wand der Komponente bewegt und mit dem reflektierenden Element (70) in Wechselwirkung tritt, um ein Rücksignal (78) zu produzieren;
Empfangen des Rücksignals (78) an der Messeinrichtung (72); und
Bestimmen der Wanddicke (52) zwischen der ersten und der zweiten Oberfläche (50, 48) unter Anwendung von Information von dem Signal (76) und dem Rücksignal (78).

2. Verfahren nach Anspruch 1, wobei das Erhalten einer Vielzahl von Windturbinenblattkomponenten (26,32,34,40) weiter das Bilden eines Wurzelabschnitts (40) eines Blattholms (26) umfasst.

3. Verfahren nach Anspruch 2, wobei das Bilden eines Wurzelabschnitts (40) eines Blattholms (26) weiter das Wickeln einer Faserbahn um einen Wickeldorn (56), um einen gewickelten Wurzelabschnitt (40) des Blattholms herzustellen, umfasst.

4. Verfahren nach Anspruch 1, wobei das Bilden einer Vielzahl von Windturbinenblattkomponenten (26, 32, 34, 40) weiter das Bilden eines Teils einer Blattschale (32, 34) umfasst.

5. Verfahren nach einem der vorhergehenden Ansprüche, wobei das Zuordnen des reflektierenden Elements (70) zu einer der ersten oder der zweiten Oberfläche der Wand der Komponente (26, 32, 34, 40) weiter umfasst:
Einfügen des reflektierenden Elements (70) in eine gegenüberliegende Oberfläche (102) einer Abziehschicht (100); und
Anbringen der Abziehschicht (100) an der Windturbinenkomponente, sodass die gegenüberliegende Oberfläche (102) der Abziehschicht unmittelbar benachbart zu einer der ersten oder der zweiten Oberfläche (50, 48) der Wand der Komponente ist.

6. Verfahren nach einem der Ansprüche 1 bis 4, wobei das Zuordnen des reflektierenden Elements (70) zu einer der ersten oder der zweiten Oberfläche (50, 48) der Wand der Komponente (26, 32, 34, 40) weiter umfasst:
Einfügen des reflektierenden Elements (70) in eine gegenüberliegende Oberfläche einer Faserschicht (118); und
Anbringen der Faserschicht (118) an der Windturbinenkomponente, sodass die gegenüberliegende Oberfläche der Faserschicht unmittelbar benachbart zu einer der ersten oder der zweiten Oberfläche (50, 48) der Wand der Komponente ist.

7. Verfahren nach einem der Ansprüche 1 bis 4, wobei das Zuordnen des reflektierenden Elements (70) zu einer der ersten oder der zweiten Oberfläche (50, 48) der Wand der Komponente (26, 32, 34, 40) weiter umfasst:
Einfügen des reflektierenden Elements (70) in eine Schicht (118) der Komponente unmittelbar benachbart zu einer der ersten oder der zweiten Oberfläche (50, 48) der Wand der Komponente, sodass das reflektierende Element (70) einen integralen Teil der Komponente bildet.

8. Verfahren nach einem der vorhergehenden Ansprüche, wobei das reflektierende Element (70) durch ein reflektierendes Muster (110, 112, 114, 116) definiert ist, wobei das reflektierende Muster aus der Gruppe ausgewählt ist, bestehend aus einer generell kontinuierlichen Fläche (110), einem oder mehreren Ringen (112), einem oder mehreren Streifen (114), einem Gittermuster (112, 114) und einem oder mehreren diskreten Stücken (116).

9. Verfahren nach einem der vorhergehenden Ansprüche, wobei das Anordnen einer Messeinrichtung (72) benachbart zu der anderen der ersten oder der zweiten Oberfläche (50, 48) der Wand der Komponente (26, 32, 34, 40) weiter das Inkontaktbringen der anderen der ersten oder der zweiten Oberfläche (50, 48) der Wand der Komponente mit der Messeinrichtung (72) umfasst.

10. Verfahren nach einem der vorhergehenden Ansprüche, wobei das Aussenden eines Signals (76) von der Messeinrichtung (72) weiter das Aussenden eines Lichtsignals oder eines Geräuschsignals von der Messeinrichtung umfasst.

11. Verfahren nach einem der vorhergehenden Ansprüche, wobei die mindestens eine der Windturbinenblattkomponenten, die eine Wand beinhaltet, ein Wurzelabschnitt (40) eines Blattholms (26) ist und die erste Oberfläche und die zweite Oberfläche (50, 48) eine Außenfläche (50) beziehungsweise eine Innenfläche (48) des Wurzelabschnitts (40) sind.

12. Verfahren nach Anspruch 11, wobei das Erhalten einer Vielzahl von Windturbinenblattkomponenten weiter das Bilden des Wurzelabschnitts (40) des Blattholms (26) durch Wickeln einer Faserbahn (64) um einen Wickeldorn, um einen gewickelten Wurzelabschnitt (40) herzustellen, umfasst.

## Revendications

1. Procédé de fabrication d'une pale d'éolienne (20), comprenant :
l'obtention d'une pluralité de composants de pale d'éolienne (26, 32, 34, 40), au moins un des composants de pale d'éolienne incluant une paroi ayant une première surface (50) et une seconde surface (48) espacée de la première surface pour définir une épaisseur de paroi (52) ; et l'assemblage de la pluralité de composants de pale d'éolienne (26, 32, 34, 40) pour produire la pale d'éolienne (20), **caractérisé par**
la mesure de l'épaisseur de paroi (52) de l'au moins un composant de pale d'éolienne (26, 32, 34, 40), comprenant :
l'association d'un élément réfléchissant (70) à l'une des première et seconde surfaces (50, 48) de la paroi du composant ;
le positionnement d'un dispositif de mesure (72) de manière adjacente à l'autre des première et seconde surfaces (50, 48) de la paroi du composant et de manière généralement opposée à l'élément réfléchissant (70) ;
l'émission d'un signal (76) depuis le dispositif de mesure (72) qui se déplace à travers la paroi du composant et interagit avec l'élément réfléchissant (70) pour produire un signal de retour (78) ;
la réception du signal de retour (78) au niveau du dispositif de mesure (72) ; et
la détermination de l'épaisseur de paroi (52) entre les première et seconde surfaces (50, 48) en utilisant des informations provenant du signal (76) et du signal de retour (78).

2. Procédé selon la revendication 1, dans lequel l'obtention d'une pluralité de composants de pale d'éolienne (26, 32, 34, 40) comprend en outre la formation d'une section d'emplanture (40) d'une poutre de pale (26).

3. Procédé selon la revendication 2, dans lequel la formation d'une section d'emplanture (40) d'une poutre de pale (26) comprend en outre l'enroulement d'une nappe de fibres autour d'un mandrin (56) pour produire une section d'emplanture enroulée (40) de la poutre de pale.

4. Procédé selon la revendication 1, dans lequel la formation d'une pluralité de composants de pale d'éolienne (26, 32, 34, 40) comprend en outre la formation d'une portion d'une coque de pale (32, 34).

5. Procédé selon l'une quelconque des revendications précédentes, dans lequel l'association de l'élément réfléchissant (70) à l'une des première et seconde surfaces de la paroi du composant (26, 32, 34, 40) comprend en outre :
l'incorporation de l'élément réfléchissant (70) dans une surface opposée (102) d'un pli décollable (100) ; et
l'application du pli décollable (100) au composant d'éolienne de telle sorte que la surface opposée (102) du pli décollable est immédiatement adjacente à l'une des première et seconde surfaces (50, 48) de la paroi du composant.

6. Procédé selon l'une quelconque des revendications 1 à 4, dans lequel l'association de l'élément réfléchissant (70) à l'une des première et seconde surfaces (50, 48) de la paroi du composant (26, 32, 34, 40) comprend en outre :
l'incorporation de l'élément réfléchissant (70) dans une surface opposée d'une couche de fibres (118) ; et
l'application de la couche de fibres (118) au composant d'éolienne de telle sorte que la surface opposée de la couche de fibres est immédiatement adjacente à l'une des première et seconde surfaces (50, 48) de la paroi du composant.

7. Procédé selon l'une quelconque des revendications 1 à 4, dans lequel l'association de l'élément réfléchissant (70) à l'une des première et seconde surfaces (50, 48) de la paroi du composant (26, 32, 34, 40) comprend en outre :
l'incorporation de l'élément réfléchissant (70) dans une couche (118) du composant immédiatement adjacente à l'une des première et seconde surfaces (50, 48) de la paroi du composant de telle sorte que l'élément réfléchissant (70) forme une partie intégrante du composant.

8. Procédé selon l'une quelconque des revendications précédentes, dans lequel l'élément réfléchissant (70) est défini par un motif réfléchissant (110, 112, 114, 116), le motif réfléchissant étant sélectionné dans le groupe constitué d'une surface généralement continue (110), d'une ou de plusieurs bagues (112), d'une ou de plusieurs bandes (114), d'un motif en croix (112, 114) et d'une ou de plusieurs pièces distinctes (116).

9. Procédé selon l'une quelconque des revendications précédentes, dans lequel le positionnement d'un dispositif de mesure (72) de manière adjacente à l'autre des première et seconde surfaces (50, 48) de la paroi du composant (26, 32, 34, 40) comprend en outre la mise en contact de l'autre des première et seconde surfaces (50, 48) de la paroi du composant avec le dispositif de mesure (72).

10. Procédé selon l'une quelconque des revendications précédentes, dans lequel l'émission d'un signal (76) depuis le dispositif de mesure (72) comprend en outre l'émission d'un signal lumineux ou d'un signal sonore depuis le dispositif de mesure.

11. Procédé selon l'une quelconque des revendications précédentes, dans lequel l'au moins un des composants de pale d'éolienne incluant une paroi est une section d'emplanture (40) d'une poutre de pale (26), et la première surface et la seconde surface (50, 48) sont une surface extérieure (50) et une surface intérieure (48), respectivement, de la section d'emplanture (40).

12. Procédé selon la revendication 11, dans lequel l'obtention d'une pluralité de composants de pale d'éolienne comprend en outre la formation de la section d'emplanture (40) de la poutre de pale (26) en enroulant une nappe de fibres (64) autour d'un mandrin pour produire une section d'emplanture enroulée (40).
